# EUROPEAN PATENT APPLICATION

(11) **EP 4 442 611 A1**
(43) Date of publication of application: **09.10.2024**
(21) Application number: 24161487.4
(22) Date of filing: 05.03.2024
(51) Int. Cl.: B65G 1/04, B65G 1/06, B65G 1/08, B65G 47/51

(54) **AUTOMATED STORAGE AND RETRIEVAL SYSTEMS UTILIZING ANGLED RACK ELEMENTS AND METHODS OF OPERATING THE SAME**

(30) Priority: 04.04.2023 US 202318295671
(71) Applicant: Intelligrated Headquarters LLC, Mason, OH 45040 (US)
(72) Inventor: SEBASTIAN, Jarl, Charlotte, 28202 (US); TURCO, Anthony, Charlotte, 28202 (US); OWEN, Mark, Charlotte, 28202 (US)
(74) Representative: Haseltine Lake Kempner LLP

(57) **Abstract**

Various embodiments are directed to an automated storage and retrieval system and methods of using the same. In various embodiments, an AS/RS comprises an angled rack element provided in between a first aisle and a second aisle, wherein a first end of the angled rack element is positioned adjacent the first aisle and a second end of the angled rack element is positioned adjacent the second aisle, and wherein the angled rack element is configured to receive an object dispensed from a first shuttle positioned within the first aisle; wherein the angled rack element defines a pitch angle defined relative to a horizontal plane to facilitate movement of the object disposed on a conveyance surface along a unidirectional transportation path towards the second end; and wherein the angled rack element is configured such that the object at the loading position is accessible to the second shuttle via the second aisle.

## Description

### FIELD OF THE INVENTION

Example embodiments of the present invention relates generally to a materials handling system defining an automated storage and retrieval system, and more specifically, to systems for assisting with the movement of one or more objects within an automatic storage and retrieval system.

### BACKGROUND

Automated storage and retrieval systems (AS/RSs) are key components in material handling environments that utilize automation, software, and labor to optimize the productivity and throughput in a variety of operations. Furthermore, AS/RSs provide flexibility and speed allowing use in applications ranging from e-commerce and omnichannel fulfillment to article distribution. Various AS/RSs utilize automated shuttles positioned within an aisle and configured to move between discrete storage locations defined along the aisle to transport objects to and from the storage locations. Applicant has identified several technical challenges associated with operably and efficiently configuring a plurality of racks of an AS/RS to enable storage and/or retrieval operations relative to storage locations defined along a plurality of aisles having a minimized spatial footprint. Through applied effort, ingenuity, and innovation, many of these identified challenges have been overcome by developing solutions that are included in embodiments of the present invention, many examples of which are described in detail herein.

### BRIEF SUMMARY

Various embodiments are directed to an automated storage and retrieval system (AS/RS) and methods of using the same. In various embodiments, the AS/RS comprises a first shuttle positioned within a first aisle and configured for transportation along a first length of the first aisle to one or more first storage locations defined by the first aisle; a second shuttle configured for transportation along a second length of the second aisle, the second aisle being at least substantially parallel to the first aisle; and an angled rack element provided in between the first aisle and the second aisle, wherein a first end of the angled rack element is positioned at least substantially adjacent the first aisle and a second end of the angled rack element is positioned at least substantially adjacent the second aisle, and wherein the angled rack element is configured to receive one or more object dispensed from the first shuttle onto a conveyance surface defined by the angled rack element; wherein the angled rack element defines a pitch angle defined relative to a horizontal plane such that the angled rack element facilitates movement of the one or more object disposed on the conveyance surface along a unidirectional transportation path towards a loading position defined at least substantially adjacent the second end of the angled rack element; and wherein the angled rack element is configured such that the one or more object provided in the loading position is accessible to the second shuttle via the second aisle to facilitate execution of a retrieval operation with respect to the one or more object by the second shuttle.

In various embodiments, the angled rack element may be configured to utilize the one or more gravitational forces to facilitate transportation of the one or more object from the first shuttle to the second shuttle. In various embodiments, the first shuttle may be configured to dispense a first object onto the angled rack element during a first dispense operation and subsequently dispense a second object onto the angled rack element during a distinct second dispense operation; and wherein the angled rack element is configured to facilitate a first object movement of the first object and a second object movement of the second object along the unidirectional transportation path towards the second end of the angled rack element such that the first object is moved to the loading position and the second object is moved to an upstream position defined relative to the first object along the conveyance surface. In certain embodiments, the second object may be stopped in the upstream position based at least in part on the second object physically contacting the first object disposed in the loading position. In certain embodiments, the angled rack element may be configured such that, upon the first object being removed from the loading position by the second shuttle, the pitch angle causes the second object to automatically move along the unidirectional transportation path at least partially towards the second end of the angled rack element based at least in part on the one or more gravitational forces acting on the second object. Further, In certain embodiments, the second object may be automatically moved along the unidirectional transportation path into the loading position.

In various embodiments, the AS/RS further comprises a plurality of aisles defined at least in part by the first aisle and the second aisle, wherein the first aisle and the second aisle are arranged relative to one another so as to define adjacent aisles within the plurality of aisles defined by the AS/RS. In certain embodiments, the first aisle and the second may be separated by a separation distance defined in a direction perpendicular to both the first length and the second length, the separation distance being at least approximately between 2 feet and 10 feet. In various embodiments, the pitch angle may be at least approximately between 2 degrees and 15 degrees. Further, in certain embodiments, the pitch angle is at least approximately between 3 degrees and 7 degrees.

In various embodiments, the angled rack element may comprise one or more conveyance element arranged between the first end and the second end that define the conveyance surface and is configured to facilitate the movement of the one or more objects along the unidirectional transportation path. In certain embodiments, the one or more conveyance element may be defined by a plurality of rollers comprising at least one idler roller rotatably installed between a set of opposing lateral frame elements, each of the rollers being configured to rotate about a respective central axis oriented in a direction at least substantially perpendicular to the unidirectional transportation path. Further, in certain embodiments, the plurality of rollers further comprises a drive roller positioned at least substantially adjacent the first end of the angled rack element, the drive roller being selectively operable to exhibit a motor-driven rotation in order cause a predetermined force to be applied to the one or more object disposed on the conveyance surface upon interaction with the drive roller. In certain embodiments, the one or more conveyance element may be defined by a conveyor belt that defines the conveyance surface of the angled rack element.

In various embodiments, the first end of the angled rack element may be configured to be secured to a first vertical rack component positioned along at least a portion of the first aisle, and the second end of the angled rack element is configured to be secured to a second vertical rack component positioned along at least a portion of the second aisle. In various embodiments, the loading position may be defined at least in part by a downstream-most portion of the conveyance surface at least substantially adjacent the second end of the angled rack element.

In various embodiments, the angled rack element may define an angled portion and a landing portion, wherein the pitch angle of the angled rack element is defined by the angled portion, and wherein the landing portion is arranged at a downstream position relative to the angled portion. In various embodiments, the landing portion may be defined by an at least substantially horizontal surface configured to receive the one or more objects moving along the unidirectional transportation path from the angled portion. In various embodiments, the first end of the angled rack element may be defined by the angled portion and the second end of the angled rack element is defined by the landing portion. Further, in certain embodiments, the loading position defined by the angled rack element may be defined by the at least substantially horizontal surface of the landing portion, such that a first object of the one or more objects being positioned at the loading positioned defined atop the landing portion is accessible to the second shuttle via the second aisle..

### BRIEF DESCRIPTION OF THE FIGURES

The following drawings are illustrations of a particular embodiments of the present disclosure and thereof do not limit the scope or spirit of the present disclosure. The drawings are not necessarily drawn to scale, nor are they necessarily are intended for use in conjunction with the explanation in the following detailed description.
FIG. 1A illustrates a schematic view of an exemplary automated storage and retrieval system (AS/RS), according to various embodiments in accordance with the present disclosure;
FIG. 1B illustrates a perspective view of an exemplary shuttle provided within an aisle of an exemplary AS/RS, according to various embodiments in accordance with the present disclosure;
FIG. 2 illustrates a schematic representation of an exemplary automated storage and retrieval system according to various embodiments of the present disclosure;
FIG. 3 illustrates a schematic depiction of an exemplary AS/RS in accordance with various embodiments of the present disclosure
FIG. 4 illustrates a side view of an angled rack element of an exemplary AS/RS in accordance with various embodiments of the present disclosure; and
FIGS. 5A-5F illustrate front perspective views of an exemplary conveyor unit moving a plurality of objects according to various embodiments of the present disclosure.

### DETAILED ESCRIPTION

The present disclosure more fully describes various embodiments with reference to the accompanying drawings. It should be understood that some, but not all embodiments are shown and described herein. Indeed, the embodiments may take many different forms, and accordingly this disclosure should not be construed as limited to the embodiments set forth herein. Rather, these embodiments are provided so that this disclosure will satisfy applicable legal requirements. Like numbers refer to like elements throughout.

It should be understood at the outset that although illustrative implementations of one or more aspects are illustrated below, the disclosed assemblies, systems, and methods may be implemented using any number of techniques, whether currently known or not yet in existence. The disclosure should in no way be limited to the illustrative implementations, drawings, and techniques illustrated below, but may be modified within the scope of the appended claims along with their full scope of equivalents. While values for dimensions of various elements are disclosed, the drawings may not be to scale.

As used herein, terms such as "front," "rear," "top," etc. are used for explanatory purposes in the examples provided below to describe the relative positions of certain components or portions of components. As used herein, the term "or" is used in both the alternative and conjunctive sense, unless otherwise indicated. The term "along," and similarly utilized terms, means near or on, but not necessarily requiring directly on an edge or other referenced location. The terms "approximately," "generally," and "substantially" refer to within manufacturing and/or engineering design tolerances for the corresponding materials and/or elements unless otherwise indicated. The use of such terms is inclusive of and is intended to allow independent claiming of specific values listed. Thus, use of any such aforementioned terms, or similarly interchangeable terms, should not be taken to limit the spirit and scope of embodiments of the present invention. As used in the specification and the appended claims, the singular form of "a," "an," and "the" include plural references unless otherwise stated. The terms "includes" and/or "including," when used in the specification, specify the presence of stated feature, elements, and/or components; it does not preclude the presence or addition of one or more other features, steps, operations, elements, components, and/or groups thereof.

The words "example," or "exemplary," when used herein, are intended to mean "serving as an example, instance, or illustration." Any implementation described herein as an "example", or "exemplary embodiment" is not necessarily preferred or advantageous over other implementations.

The words "lateral," longitudinal," and "vertical," when used herein, are intended to be used for referential and/or illustrative purposes in order to provide context for one or more aspects of the present invention and should be strictly interpreted as being limited a particular universal direction. By way of non-limiting example, as described herein with reference to the directional references provided in the figures, the "lateral" direction may extend along an x-axis, a "longitudinal" direction may extend perpendicularly within at least substantially the same plane as a lateral direction, such as, for example, along a y-axis, and a "vertical" direction may extend perpendicularly within an at least substantially perpendicular plane relative to both the lateral and longitudinal directions, such as, for example, along an a z-axis.

The term "conveyor", "conveyor zone", "conveyor bed", or "conveyor unit" may be used interchangeably throughout the specification. In some embodiments, such conveyors may be combined as discussed herein with standard conveyors and/or additional conveyors with transverse drives to form one or more conveyor systems. Further, the term "conveyor rollers" or "rollers" may be used interchangeably throughout the specification.

Further, the term "conveyor roller" or "roller" may be used interchangeably throughout the specification.

The figures of the current embodiment of the invention are not necessarily drawn to scale and are provided to illustrate some examples of the invention described. The figures are not to limit the scope of the present embodiment of the invention or the appended claims. Aspects of the example embodiment are described below with reference to example applications for illustration. It should be understood that specific details, relationships, and methods are set forth to provide a full understanding of the example embodiment. One of ordinary skill in the art recognize the example embodiment can be practice without one or more specific details and/or with other methods.

The components illustrated in the figures represent components that may or may not be present in various embodiments of the invention described herein such that embodiments may include fewer or more components than those shown in the figures while not departing from the scope of the invention.

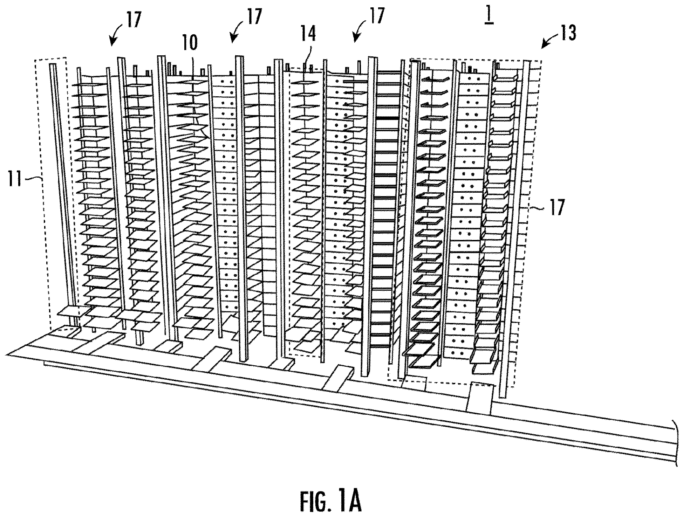

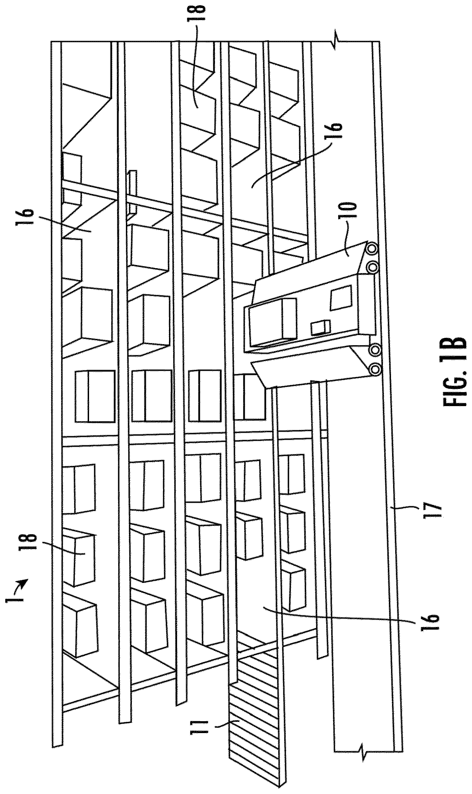

FIGS. 1A and 1B illustrate a material handling system that includes an automated storage and retrieval system (AS/RS) 1. As illustrated, a storage rack 13 of the AS/RS 1 may be defined as a series of vertically arranged shelves, each supported by a support frame. The support frame may comprise vertical support members separating various levels within the storage rack 13, and horizontal support members supporting individual shelves. Each shelf may define and/or comprise one or more bay, each bay may encompass a plurality of storage locations configured for storing at least one object (e.g., a storage container, a product, a spool, and/or other object configurations) therein. In various embodiments, an AS/RS 1 may define one or more aisles 17 defined between two adjacent storage racks 13 with one or more shuttles 10 defined therein to remove and/or place objects into storage locations within the storage rack. In various embodiments, an aisle 17 may be defined by at least one storage rack element on a first side of a robotic shuttle and/or at least one additional storage rack element on a second side of a robotic shuttle. As shown, the objects may be moved between different levels via lifts 11 and/or to and from pick-up and drop-off stations 14.

As described herein, in various embodiments, each shelf within a storage rack 13 of an AS/RS 1 may comprise a storage location. For example, each level of a storage rack 13 may be divided into storage locations which may be defined as a physical space on the shelf where an object may be stored. For example, in various embodiments, an object may be any type of container used in an AS/RS, such as a carton, a case, a tote, a divided tote, a tray, a pallet, or the like. In various embodiments, as discussed herein the storage location may be defined by a storage depth and a storage width configured such that the storage location is capable of holding one or more objects. Various shelves may have various configurations with storage locations having different sizes and/or depths based on the given configuration (e.g., the size and shape of a given object). Further, an exemplary storage location defined within a storage rack 13 may be configured such that an object stored therein may be retrieved, disposed, and/or otherwise engaged by the shuttle 10 positioned within a corresponding aisle 17 defined, at least in part, by the storage rack 13.

As illustrated, the storage racks 13 of an exemplary AS/RS 1 may be arranged such that each pair of adjacent storage racks 13 and/or a portion of the storage rack (e.g., storage rack element, conveyor unit, etc.) defines an aisle 17 along which an exemplary shuttle 10 of the AS/RS 1 may travel to retrieve and/or deposit an object from one or more storage locations positioned along the aisle 17 as defined by the adjacent storage racks 13. In various embodiments, the shuttle 10 may be disposed within the aisle 17 defined by a space between two adjacent storage racks, such that the shuttle 10 may retrieve one or more objects from any storage location of the two storage racks defined along the aisle that is accessible to the shuttle 10 from the position between the two storage racks (e.g., a load arm(s) of a shuttle 10 may extend towards either of the two storage racks defining the aisle 17). For example, two adjacent storage racks may be separated sufficiently to allow the shuttle to move therebetween.

In various embodiments, the AS/RS 1 may comprise at least one automated shuttle 10 that is disposed within an aisle 17 (e.g., within a space defined adjacent a storage rack) and configured to travel along the length of the aisle 17 (e.g., along a shuttle guide track provided within the aisle 17) to facilitate the retrieval, storage, and/or transportation of various objects throughout the AS/RS 1. For example, FIG. 1B illustrates a perspective view of an exemplary shuttle positioned within an aisle of an AS/RS according to one or more embodiments. In particular, FIG. 1B illustrates an aisle 17 of the exemplary AS/RS 1 and an exemplary shuttle 10 positioned therein and configured to travel along the aisle 17 to one or more service storage locations 16 defined by a storage rack provided on one side of the aisle 17. In order to remove and/or place objects into various storage locations of a storage rack 13, the AS/RS 1 may use the shuttle 10 configured to retrieve an object from the storage rack 13 (e.g., the storage location), as described herein. For example, an exemplary shuttle 10 may be configured to facilitate storage and/or retrieval of an object within an AS/RS 1 by handling the object and transporting the object to and/or from a storage location within the AS/RS 1, such as, for example, a storage location 16 defined along an aisle 17.

As illustrated, a lift 11 may leave one or more objects 18 at a pickup and deposit adjacent the lift on an assigned level and aisle 17 within the AS/RS 1 (e.g., extending between adjacent storage racks 13). A shuttle 10 may be configured to pick up the one or more objects 18 at the pickup and deposit station adjacent the lift 11 and support the one or more objects on a load bed of the shuttle, as described in further detail herein, as the shuttle 10 moves along the aisle 17 to transport the object(s) 18 to an assigned storage location 16 and place the one or more objects therein for storage. Further, in various embodiments, the shuttle 10 may be further configured to retrieve one or more objects 18 from a particular assigned storage location 16 defined along the aisle 17 and transport them to the pickup and deposit station adjacent the lift 11 station as part of a retrieval operation. For example, the shuttle 10 may be moved to a position at least substantially adjacent (e.g., aligned with) a specific storage location defined by a rack 13 in order to retrieve an object disposed within the storage location as part of a retrieval operation, and/or in order to dispense an object being transported by the shuttle 10 onto the rack 13 (e.g., onto a storage location and/or onto an angled track element) as part of a storage operation.

In various embodiments, the shuttle 10 may comprise a free-range vehicle configured for movement throughout an AS/RS 1 to facilitate transportation, retrieval, and/or disposal of an object within the AS/RS 1. As a non-limiting example, in various embodiments, the shuttle 10 may be a type of one-level shuttle (OLS) vehicle typically used in a AS/RS, such as a shuttle, a carrier, a bot, and/or the like. The shuttle(s) 10 may be configured to move along the aisle of a storage rack 13 via a shuttle guide track extending along the length thereof, such as, for example, via the one or more wheels of the base assembly. In various embodiments, the shuttle guide track may be affixed to at least a portion of the storage rack 13. Alternatively, or additionally, it should be understood that any of a variety of movement mechanisms may be utilized for moving a shuttle 10 (e.g., belt-drive systems, magnetic movement mechanisms, chain-drive systems, and/or the like). Moreover, it should be understood that the movement mechanisms may be defined within the shuttle 10 (e.g., a motor positioned on the shuttle) or within the storage rack 13 (e.g., motors within the storage rack).

In various embodiments, an exemplary shuttle 10 of the AS/RS 1 may be configured to execute an object transportation operation and/or otherwise operate within the AS/RS 1 based on one or more signals received from a computing device of the AS/RS 1. In various embodiments, the exemplary AS/RS 1 may comprise one or more computing devices configured to facilitate communication with each of the exemplary shuttles of the AS/RS to control the transportation, object engagement, and/or data capture operations of the shuttles during operation of the AS/RS 1. For example, in an exemplary AS/RS 1 having a plurality of shuttles that are each configured for operation within a respective aisle defined by the AS/RS 1, the AS/RS 1 may include a plurality of computing devices, each assigned to a respective one of the plurality of aisles and configured to facilitate control of those shuttles disposed within that particular aisle.

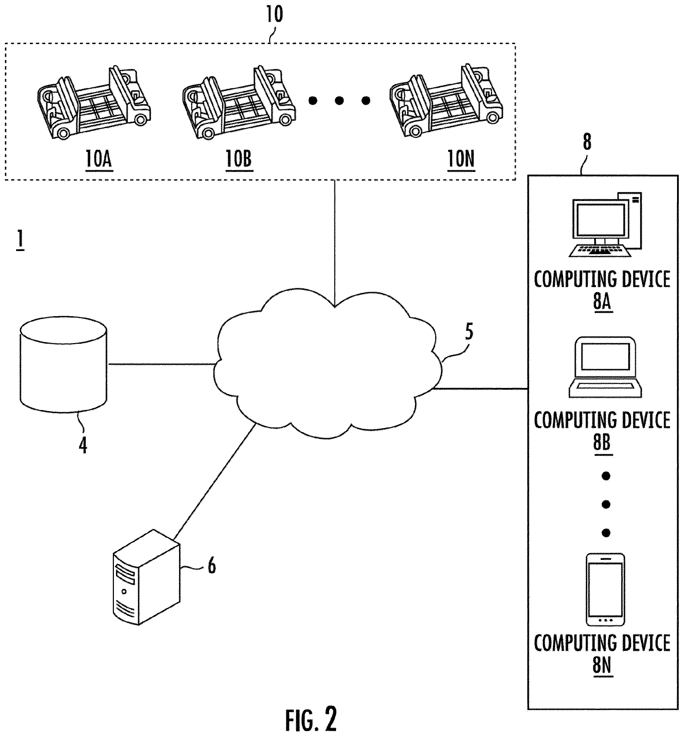

As an illustrative example, FIG. 2 illustrates an example schematic diagram depicting various components of an example AS/RS 1 in accordance with various embodiments of the present disclosure. In various embodiments, an exemplary AS/RS 1 may comprise one or more shuttle 10 (e.g., a plurality of shuttles 10A-10N), one or more computing entities 6 (e.g., servers), one or more storage medium 4, one or more networks 5, one or more user computing devices 8, and/or the like. In various examples, the AS/RS 1 may operate to convey objects within a particular location or environment, such as, for example, within one or more aisles defined by the AS/RS 1, as described herein.

In various embodiments, the one or more shuttle 10 may be or comprise a robot, shuttle, motorized vehicle, combinations thereof, and/or the like. The example one or more shuttle 10 may operate to transport objects within a particular location or environment based at least in part on real-time information obtained by one or more sensing elements of the shuttle. In various embodiments, a shuttle 10 of the AS/RS may embody an electronically communicative device configured for automated movement and/or operation within the AS/RS 1 (e.g., relative to one or more aisles) to execute one or more object transportation operations, as described herein. For example, an exemplary shuttle 10 may execute various automated operations defined according to control signals communicated to the shuttle 10 by a computing device 8 associated therewith (e.g., computing device 8A, computing device 8N). In various embodiments, a shuttle 10 may comprise a shuttle body, one or more transportation components (e.g., a drive motor and one or more wheels), one or more sensing elements (e.g., a position identifier detector), and/or one or more controllers configured to facilitate electronic communication of one or more instructional signals, informational signals, and/or the like between the shuttle 10 and/or one or more other components of the AS/RS 1, such as, for example, computing device 8 of the AS/RS 1 that is configured for controlling and/or communicating with each of the one or more shuttles 10 provided within a shuttle aisle defined by the AS/RS 1. For example, as described herein, an exemplary shuttle 10 provided within a shuttle aisle of the AS/RS 1 may be configured to facilitate an automatic association with a computing device associated with the shuttle aisle to facilitate communication of one or more signals between the shuttle and the computing device (e.g., via a two-way communication channel) in order to execute, track, and/or otherwise characterize the performance and/or operating status of a shuttle 10 during operation of the AS/RS 1.

In some embodiments, the one or more shuttle 10, the one or more computing entities 6, the one or more storage medium 4 and/or the one or more user computing devices 8 are in electronic communication with each other over the one or more networks 5 such that they can exchange data (e.g., receive and transmit data) with one another (e.g., periodically and/or in response to requests). Each of the components of the AS/RS 1, including the one or more shuttle 10, the one or more computing entities 6, the one or more storage medium 4 and/or the one or more user computing devices 8 may be in communication with one another over the same or different wireless or wired networks 5 including, for example, a wired or wireless Personal Area Network (PAN), Local Area Network (LAN), Metropolitan Area Network (MAN), Wide Area Network (WAN), cellular network, and/or the like. While FIG. 2 illustrates certain system components as separate, standalone devices, the various embodiments are not limited to this particular architecture.

As depicted in FIG. 2, the example AS/RS 1 comprises one or more computing entities 6. In general, the terms computing device, entity, device, system, and/or similar words used herein interchangeably may refer to, for example, one or more computers, computing devices, computing entities, desktop computers, mobile phones, tablets, phablets, notebooks, laptops, distributed systems, terminals, servers or server networks, blades, gateways, switches, processing devices, set-top boxes, relays, routers, network access points, base stations, the like, and/or any combination of devices adapted to perform the functions, operations, and/or processes described herein. Such functions, operations, and/or processes may include, for example, transmitting, receiving, operating on, processing, displaying, storing, determining, generating/creating, monitoring, evaluating, comparing, and/or similar terms used herein interchangeably. In one embodiment, these functions, operations, and/or processes can be performed on data, content, information, and/or similar terms used herein interchangeably.

In some examples, the computing entity 6 may also include one or more network and/or communications interfaces for communicating with various computing entities, such as by communicating data, content, information, and/or similar terms used herein interchangeably that can be transmitted, received, operated on, processed, displayed, stored, and/or the like.

As depicted in FIG. 2, any two or more of the illustrative components of the AS/RS 1 of FIG. 2 may be configured to communicate with one another via one or more networks 5. The networks 5 may include, but are not limited to, any one or a combination of different types of suitable communications networks such as, for example, cable networks, public networks (e.g., the Internet), private networks (e.g., frame-relay networks), wireless networks, cellular networks, telephone networks (e.g., a public switched telephone network), or any other suitable private and/or public networks. Further, the networks 5 may have any suitable communication range associated therewith and may include, for example, global networks (e.g., the Internet), MANs, WANs, LANs, or PANs. In addition, the networks 5 may include any type of medium over which network traffic may be carried including, but not limited to, coaxial cable, twisted-pair wire, optical fiber, a hybrid fiber coaxial (HFC) medium, microwave terrestrial transceivers, radio frequency communication mediums, satellite communication mediums, or any combination thereof, as well as a variety of network devices and computing platforms provided by network providers or other entities.

While FIG. 2 provides an example AS/RS 1, it is noted that the scope of the present disclosure is not limited to the example shown in FIG. 2. In some examples, the AS/RS 1 may comprise one or more additional and/or alternative elements, and/or may be different from that illustrated in FIG. 2.

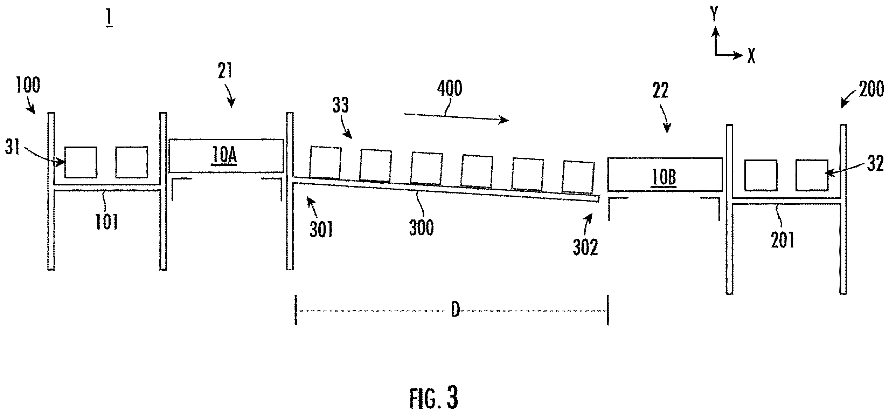

FIG. 3 illustrates a schematic depiction of an exemplary AS/RS in accordance with various embodiments of the present disclosure. In various embodiments, an example AS/RS 1 may comprise a plurality of storage racks defied by various rack elements such as, for example, vertical rack elements, shelf elements, angled rack elements, and/or the like, arranged such that a plurality of aisles are defined between adjacent storage racks to enable one or more shuttles of the AS/RS to access the various storage locations defined by the plurality of storage racks in order to execute a storage and/or retrieval operation. In various embodiments, as illustrated in FIG. 3, an AS/RS 1 may define a first aisle 21 along which a first shuttle 10A may be configured to move and a second aisle 22 along which a second shuttle 10B may be configured to move independently of the first shuttle 10A. As illustrated, the first aisle 21 may be defined in part by a first storage rack 100 positioned along a first side of the first shuttle 10A such that at least a portion of the first shuttle 10A may be moved in a first direction at least substantially away from the adjacent second aisle 22 (e.g., in the negative x-direction, as defined in the orientation shown in the exemplary embodiment illustrated in FIG. 3) and towards an adjacent storage location defined by the first storage rack 100 to facilitate shuttle interaction with one or more objects 31 stored and/or to be stored on a shelf element 101 defined by the first shuttle rack 100. Further, the second aisle 22 of the exemplary AS/RS 1 may be defined in part by a second storage rack 200 positioned along a second side of the second shuttle 10B such that at least a portion of the second shuttle 10B may be moved in a second direction at least substantially away from the adjacent first aisle 21 (e.g., in the positive x-direction, as defined in the orientation shown in the exemplary embodiment illustrated in FIG. 3) and towards an adjacent storage location defined by the second storage rack 200 to facilitate shuttle interaction with one or more objects 32 stored and/or to be stored on a shelf element 201 defined by the second shuttle rack 200.

In various embodiments, an exemplary AS/RS 1 may comprise an angled rack element 300 disposed at least partially between the adjacent first and second aisle 21, 22 and configured to enable the selective transportation of one or more objects 33 from a first end 301 defining an intake end adjacent the first aisle 21 to a second end 302 defining a dispense end adjacent the second aisle 22. In various embodiments, as depicted in FIG. 3, the angled rack element 300 may define a conveyance surface along which one or more objects 33 may be disposed in order to transport the one or more objects 33 along a transportation path 400 defined along a length of the conveyance surface between the first end 301 and the second end 302 of the angled rack element 300. As non-limiting examples described in further detail here, the conveyance surface of the angled rack element 300 may be defined by plurality of roller elements (e.g., a plurality idler rollers), a conveyor belt, and/or the like, or any other surface (e.g., singular or collective surface) configured to receive the one or more objects 33 thereon to enable the transportation of the one or more objects 33 along the transportation path 400.

In various embodiments, an exemplary AS/RS 1 may comprise an angled rack element 300 that is configured to facilitate the transportation of an object from an aisle defined by the AS/RS 1, such as, for example, a first aisle 21, out of the AS/RS 1 to an external location defined outside of the racking of the AS/RS 1. For example, an exemplary angled rack element 300 may be arranged such that the second end 302 thereof is disposed at least substantially adjacent an exterior location defined outside of the racking of the AS/RS 1. As a non-limiting example, the AS/RS 1 may be configured such that upon an object being dispensed onto the first end 301 of the angled rack element 300 (e.g., from the first shuttle 10A positioned within the first aisle 21), the object may travel along a transportation path 400 and be dispensed from the second end 302 to a secondary location defined by a tote, carton, "put wall," and/or the like configured to receive the dispensed object and facilitate subsequent operator access with the dispensed object via the tote, carton, "put wall," and/or the like.

The AS/RS 1 may be configured such that the first end 301 of the angled rack element 300 may be adjacent the first aisle 21, such as, for example, along a second side of the first shuttle 10A, such that at least a portion of the first shuttle 10A may be moved in a second direction at least substantially towards the adjacent second aisle 22 (e.g., in the positive x-direction, as defined in the orientation shown in the exemplary embodiment illustrated in FIG. 3) to facilitate a dispense of one or more objects being transported by the first shuttle 10A (e.g., on a load bed thereof) from the first aisle 21 onto the angled rack element 300 (e.g., at the first end). The first shuttle 10A transporting an object along the first aisle 21 may be moved along the first aisle 21 to a position adjacent (e.g., aligned with) the first end 301 of the angled rack element 300 and the AS/RS 1 may be configured such that the first shuttle 10A may dispense the one or more objects (e.g., from a load bed of the shuttle) onto the angled rack element 300 (e.g., at the first end 301) in order to facilitate the transportation of the one or more objects towards a second end 302 of the angled rack element 300 such that the one or more objects may be retrieved by the second shuttle 10B from the within the second aisle 22. Further, the angled rack element 300 of the exemplary AS/RS 1 may be configured such that the second end 302 may be positioned adjacent the second aisle 22, such as, for example, relative to a first side of the second shuttle 10B, such that at least a portion of the second shuttle 10B may be moved in a first direction at least substantially towards the adjacent first aisle 22 (e.g., in the negative x-direction, as defined in the orientation shown in the exemplary embodiment illustrated in FIG. 3) to facilitate shuttle interaction with one or more objects disposed in a loading position at the second end 302 of the angled rack element 300 as part of a retrieval operation executed by the second shuttle 10B from the second aisle 22.

In various embodiments, the angled rack element 300 may define an angled configuration that enables the angled rack element 300 to utilize gravitational force to assist with the movement of at least one object disposed on the conveyance surface thereof. In particular, FIG. 3 shows an exemplary AS/RS 1 comprising an angled rack element 300 that is provided between first and second aisle 21,22 at an angled configuration such that the angled rack element 300 functions as a decline zone within the AS/RS 1. For example, the angled rack element 300 (e.g., the conveyance surface thereof) may define a pitch angle such that, based at least in part on gravitational forces acting on the one or more objects 33 disposed thereon, the one or more objects 33 disposed on the conveyance surface may be moved along the transportation path 400 towards a loading position defined at the second end 302. As described herein, the pitch angle of the frame element 300 may be configured such that, upon an object being transported along the transportation path 400 such that the object is disposed in a loading position defined at the second end 302 of the angled rack element 300, the object may be retrieved by the second shuttle 10B from a position along the second aisle 22 that is adjacent and/or aligned with the second end 302.

As illustrated, the angled configuration of the angled rack element 300 may enable a plurality of objects 33 to be simultaneously disposed along the conveyance surface of the angled rack element 300 such that one of the plurality of objects is arranged in a loading position defined at the second end 302 of the angled rack element 300. In such an exemplary configuration, as described herein, the second shuttle 10B may execute a series of retrieval operations with respect to each of the plurality of objects 33 in series, as the angled rack element 300 may be configured such that, upon a first object of the plurality of objects 33 being retrieved from the angled rack element 300 by the second shuttle 10B, one or more gravitational forces may cause the next object of the plurality 33 to be moved along the transportation path 400, so as to cause the next object to be arranged in the loading position at the second end 302 for access via the second aisle 22 during a subsequent retrieval operation. Such an exemplary angled rack element 300 configuration may enable a series of retrieval operations to be executed with respect to the plurality of objects 33 disposed on the angled rack element 300 via one or more shuttles traveling along the second aisle 22 without needing to rearrange the objects 33 within the angled rack element 300 or requiring any manual user intervention.

In various embodiments wherein the AS/RS 1 comprises a plurality of parallel aisles, the first and second aisles 21, 22 may embody adjacent aisles that are separated by a separation distance d defined in a direction perpendicular to both a first length of the first aisle 21 and a second length of the second aisle 22. For example, as defined by the exemplary orientation illustrated in the embodiment shown in FIG. 3, the separation distance d between the first aisle 21 and the second aisle 22 adjacent thereto may be defined in the x-direction. In various embodiments, an exemplary AS/RS 1 may be configured to utilize an angled rack element 300 provided in between the first and second aisles 21, 22 (e.g., spanning the separation distance D defined between the adjacent aisles 21, 22) to provide an operable means of accessing storage locations defined along the first and second aisles 21, 22 and further transporting one or more objects retrieved from the adjacent aisles 21, 22 throughout the AS/RS 1, while also enabling the separation distance D between the adjacent aisles 21, 22 to be at least substantially reduced by minimizing the amount of square footage that may traditionally be occupied by first and second racks defining storage locations accessible to the first and second shuttles 10A, 10B, respectively. As a non-limiting example provided for illustrative purposes, an exemplary separation distance exhibited between the first shuttle 10A and the second shuttle 10B of an AS/RS in which the first aisle 21 includes first additional storage rack on the second side of the first shuttle 10A and the second aisle 22 includes a second additional storage rack (e.g., next to the first storage rack) on the first side of the second shuttle 10B the second aisle 22 may be defined at least by the collective distance of both the first and second additional racks, as measured in the x-direction. In various embodiments, an exemplary AS/RS 1 comprising the angled rack element 300 disposed between the first and second aisles 21, 22 (e.g., spanning the separation distance D between the first and second shuttles 10A, 10B) may represent a distance that is at least substantially less than a collective distance of the first and second additional racks. Accordingly, the angled rack element 300 configured to be positioned between the first and second aisles 21, 22 and maintain an operable product flow throughout the AS/RS 1 may enable the AS/RS 1 to be defined by a reduced footprint, which is often critical and highly valuable in materials handling environments. In various embodiments, a separation distance defined between a set of adjacent aisles having an angled rack element provided therebetween may be at least approximately between 2 feet and 10 feet (e.g., between 2 feet and 6 feet).

In various embodiments, an exemplary AS/RS 1 may comprise a plurality of angled rack elements. As a non-limiting example, an exemplary AS/RS may comprise a first angled rack element disposed between a first set of adjacent aisles defined by the AS/RS 1, such as, for example, a first aisle 21 and an adjacent second aisle 22, such that a first shuttle (e.g., first shuttle 10A) disposed within the first aisle and a second shuttle (e.g., second shuttle 10B) disposed within the adjacent second aisle may each interact with the first angled rack element (e.g., and/or one or more objects disposed thereon), as well as a second angled rack element disposed between a second set of adjacent aisles of the AS/RS 1, such as, for example, the second aisle 22 and an adjacent third aisle (not shown) that is parallel to each of the first and second aisles, such that the second shuttle disposed within the second aisle and a third shuttle disposed within the adj acent third aisle may each interact with the second angled rack element (e.g., and/or one or more objects disposed thereon). In such an exemplary configuration, the AS/RS 1 may be configured such that the first and second angled rack elements may enable transportation of one or more object from a first shuttle to the third shuttle based at least in part on the respective pitch angles and the gravitational forces acting on the one or more objects disposed on the respective angled rack elements. Alternatively, and/or additionally, in an exemplary embodiments wherein the AS/RS 1 is defined by a plurality of levels, the AS/RS 1 may comprise a plurality of angled rack elements arranged within a plurality of different levels. For example, in an exemplary configuration wherein the AS/RS 1 comprises a plurality of racks that define a first level and a second level directly above the first level, the AS/RS 1 may comprise a first angled rack element defined at least partially within the first level and a second angled rack element defined at least partially within the second level. In such an exemplary configuration, the second angled rack element may be positioned at least substantially directly above the first angled rack element. Further, in such an exemplary configuration, the first and second angled rack elements may have at least substantially similar pitch angles.

In various embodiments, an exemplary AS/RS 1 may comprise one or more sensors configured to determine whether an object is present at one or locations along the angled rack element 300, such as, for example, at a first end 301 of the angled rack element 300 and/or at the loading position defined at the second end 302. In various embodiments, the one or more sensors may embody a proximity sensor, an imaging device, and/or the like, or any other sensor configured to detect the presence of an object at a designated location. For example, in various embodiments, an exemplary AS/RS 1 may include one or more sensors secured to one or more of the first storage rack 100 and/or the angled storage rack 300 such that the one or more sensor is arranged relative to the first end 301 of the angled rack element 300 and configured to detect the presence of an object at a location at least substantially adjacent the first end 301. As a further example, in various embodiments, an exemplary AS/RS 1 may include one or more sensors secured to one or more of the second storage rack 100 and/or the angled storage rack 300 such that the one or more sensor is arranged relative to the second end 302 of the angled rack element 300 and configured to detect the presence of an object at a location (e.g., at a loading position) at least substantially adjacent the second end 302.

Further, in various embodiments, the exemplary AS/RS 1 may include one or more sensors secured relative to the shuttles 10A, 10B such that, when the shuttle 10A, 10B is positioned adjacent a corresponding end 301, 302 of the angled rack element 300, the one or more sensor faces towards the corresponding end 301, 302 of the angled rack element 300 to facilitate a determination of whether an object is present on the angled rack element 300 at the corresponding end 301, 302.

In various embodiments, each of the one or more sensors defined by the AS/RS 1 may be communicatively connected to a controller defined by the AS/RS 1. Each of the one or more sensors may be configured to capture object data defined by the presence of an object at one or more locations along an angled rack element 300 (e.g., at a first end 301, at a second end 302) and transmit the captured object to the controller. For example, in various embodiments, based at least in part on the object data captured by the one or more sensors associated with either the first end 301 or the second end 302 of the angled rack element 300, the AS/RS 1 may be configured to operate while avoiding storage and/or retrieval operation failures resulting from an unexpected presence and/or absence of an object along the angled rack element 300. For example, the AS/RS 1 may utilize the object data captured by an object sensor to determine that an object is present at the first end 301 of the angled rack element 300 and, in such an exemplary circumstance, avoid causing the first shuttle 10A to initiate a storage operation wherein the shuttle 10A is instructed to dispense another object onto the first end 301 of the angled rack element 300. Similarly, the AS/RS 1 may utilize the object data captured by an object sensor to determine that an object is absent at the second end 302 of the angled rack element 300 (e.g., at the loading position) and, in such an exemplary circumstance, avoid causing the second shuttle 10B to initiate a retrieval operation defined by the shuttle 10B being instructed to retrieve an object that is determined to be absent from the loading position.

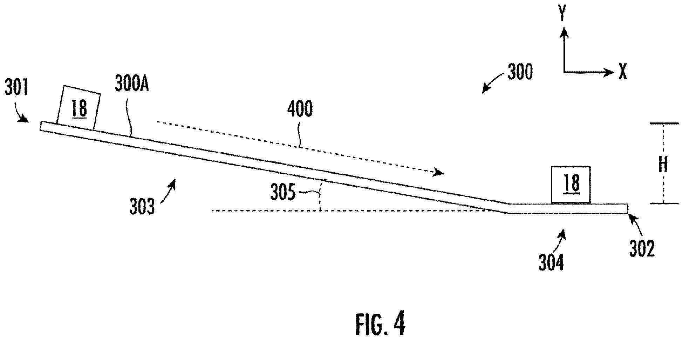

FIG. 4 illustrates an example schematic depiction of an angled rack element of an exemplary AS/RS in accordance with various embodiments of the present disclosure. As illustrated, the exemplary angled rack element 300 configured for arrangement between adjacent (e.g. parallel) aisles of an AS/RS may define a conveyance surface 300A that is arranged at an angle relative to an exemplary horizontal plane (e.g., in the x-z plane, as defined by the exemplary orientation illustrated in FIG. 4) such that a first end 301 of the angled rack element 300 (e.g., the upstream-most portion of the conveyance surface 300A defined at the beginning of the angled rack element 300, as defined relative to the transportation path 400) is positioned at a first vertical height that is higher than a second vertical height defined by the second end 302 of the angled rack element 300 (e.g., the downstream-most portion of the conveyance surface 300A defined at the end of the angled rack element 300, as defined relative to the transportation path 400). For example, as illustrated, the first vertical height defined by the first end 301 and the second vertical height defined by the second end 302 may be separated by a vertical separation distance H. As illustrated, the angular configuration of the angled rack element 300 may be defined by a pitch angle 305 measured relative to an exemplary horizontal plane, such as, for example, an at least substantially horizontal ground surface upon which the racks of the AS/RS between which the angled rack element 300 is configured to be arranged are positioned. For example, the pitch angle 305 defined by the angled rack element 300 may be defined by the angle between the conveyance surface 300A of the angled rack element 300 and an exemplary horizontal plane (e.g., at least substantially horizontal ground surface). For example, in various embodiments, the angled rack element 300 may be configured to define a pitch angle of at least substantially between 2 degrees and 15 degrees (e.g., between 3 degrees and 7 degrees).

In various embodiments, as depicted in FIG. 4, the angled rack element 300 may comprise an angled portion 303 defining the angled configuration of the angled rack element 300, as described herein, and a landing portion 304 arranged in a downstream position relative to the angled portion 303 (e.g., as defined relative to the transportation path 400) and configured to receive an object from the angled portion 303 such that the object is disposed in a loading position at least substantially adjacent the second end 302 of the angled rack element 300. In such an exemplary configuration, the first end 301 of the angled rack element 300 may be defined by the angled portion 303 and the second end 302 of the angled rack element 300 may be defined by the landing portion 304. For example, as illustrated, the landing portion 304 may be defined by an at least substantially flat (e.g., horizontal) surface on which one or more objects traveling along the transportation path 400 defined by the conveyance surface 300A may be received upon being moved through the entirety of the length of the angled portion 303. In various embodiments, the landing portion 304 may be configured to receive an object from the angled portion 303 such that the object is stopped in a loading position defined atop the at least substantially horizontal surface of the landing portion 304. For example, the angled rack element 300 maybe configured such that upon an object 18 being dispensed onto the angled portion 303 (e.g., from a first shuttle positioned within a first aisle adjacent the first end 301 of the angled rack element 300) the pitch angle 305 defined by the angled portion 303 may be angled towards the second aisle adjacent the second end 302, as described herein, so as to cause one or more gravitational forces acting on the object 18 to pull the object along the conveyance surface 300A through the transportation path 400. The angled portion 303 may be configured to bias the object 18 in a direction at least substantially towards the second end 302, such as, for example, towards the landing portion 304, such that the object 18 may be predisposed towards an arrangement at the loading position defined at the second end 302 and/or atop the landing portion 304, as illustrated.

In various embodiments wherein an exemplary angled rack element 300 comprises a landing portion 304 downstream of the angled portion 303, as illustrated in FIG. 4, the landing portion 304 may be configured to slow down and/or completely stop the movement of an object 18 traveling along the transportation path 400 before the object 18 reaches the second end 302 of the angled rack element 300. Further, in carious embodiments, the landing portion 304 may comprise a stopping element configured for engagement with an object 18 traveling along the transportation path 400 so as to embody a physical obstacle that prevents the object 18 from moving beyond second end 302, such as, for example, in the positive x-direction as defined by the orientation of the exemplary embodiment illustrated in FIG. 4.

In various embodiments, the landing portion 304 provided at the downstream-most end of the angled rack element 300 may embody a storage location from which an object disposed thereon in the loading position may be retrieved by a second shuttle (e.g., a shuttle arranged in a second aisle at least substantially adjacent the second end 302 of the angled rack element 300). Further, in various embodiments, the landing portion 304 may define a double-wide configuration, wherein the landing portion 304 may be configured such that two objects may be simultaneously disposed thereon at varying depths relative to the adjacent aisle (e.g., the second aisle) and, thus, the landing portion 304 embodies a double-deep storage location within which two objects may be simultaneously stored and/or sequentially accessed by one or more shuttles positioned within the aisle adjacent the landing portion 304 (e.g., the second aisle).

In various embodiments, the angled rack element 300 may comprise one or more conveyance elements arranged between the first end 301 and the second end 302 that define(s) the conveyance surface 300A of the angled rack element 300 and is (are) configured to facilitate the movement of one or more objects disposed thereon along a transportation path 400 towards a loading position defined at least substantially adjacent the second end 302 of the angled rack element 300. For example, in various embodiments, the one or more conveyance elements may comprise a plurality of idler rollers rotatably installed between a set of opposing lateral frame elements arranged at the pitch angle 305 between adjacent aisles of the AS/RS, as described herein. For example, each of the plurality of idler rollers may be configured to rotate about a respective central axis oriented in a direction at least substantially perpendicular (e.g., orthogonal) to the length of the angled rack element 300 in order to facilitate the movement of an object disposed thereon along the transportation path 400 defined along the length of the angled rack element 300. Alternatively and/or additionally, the angled rack element 300 may comprise a plurality of rollers including a drive roller disposed at least substantially adjacent the first end 301. In such an exemplary configuration, the drive roller may be selectively operable (e.g., via a controller of the AS/RS) to exhibit a motor-driven rotation upon an object being dispensed (e.g., by a first shuttle) onto the angled rack element 300, such that the drive roller may initiate a movement of the object along the transportation path 400 (e.g., towards the second end 302) at a predetermined linear speed. Further still, alternatively and/or additionally, the angled rack element 300 may include a conveyor belt that defines the conveyor surface 300A. In such an exemplary circumstance, the conveyor belt may be operably engaged with one or more rollers defined by the angled rack element 300 such that the conveyor belt exhibits one or more of a motor-driven movement and a free-standing rotational movement to facilitate the transportation of the object(s) disposed thereon along the transportation path 400. Further still, alternatively and/or additionally, the angled rack element 300 may include a low-traction conveyor surface defined by an at least substantially small coefficient of friction in order to facilitate the transportation of an object along the transportation path 400 based on one or more gravitational forces acting on the object.

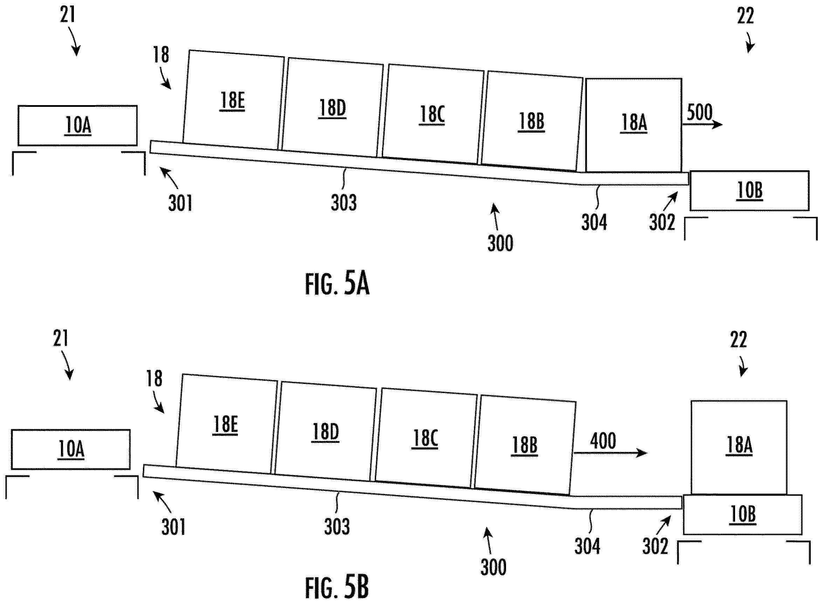

FIGS. 5A-5F illustrate an example schematic depicting various movement operations of an example conveyor unit in accordance with various embodiments of the present disclosure. In various embodiments, as depicted in FIG. 5A, an exemplary angled rack element 300 arranged between adjacent (e.g., parallel) first and second aisles 21, 22 may be configured such that a plurality of objects 18 (e.g., objects 18A, 18B, 18C, 18D, 18E) may be simultaneously disposed on the angled rack element 300. For example, each of the plurality of objects 18 may be dispensed onto the angled rack element 300 by a first shuttle 10A positioned within a first aisle 21 as part of series of distinct transportation operations executed by the first shuttle 10A in series, wherein the first shuttle 10A retrieved each of the plurality of objects from respective storage locations defined along the first aisle 21 and subsequently dispensed each object onto the angled portion 303 of the angled rack element 300. As illustrated, in various embodiments, the angled rack element 300 may be configured to allow for a backlog of objects 18 to be collected along the conveyor surface defined of the angled rack element 300 in an exemplary circumstance wherein the first shuttle 10A dispenses one or more subsequent objects (e.g., objects 18B, 18C, 18D, 18E) onto the angled rack element 300 prior to a first object 18A that was initially dispensed onto the angled rack element 300 being retrieved therefrom by a second shuttle 10B positioned within the second aisle 22.

As a non-limiting example provided for illustrative purposes, the first object 18A may be at least substantially stabilized in a loading position defined at least substantially adjacent the second end 302 of the angled rack element 300 (e.g., on the loading portion 304), as described herein. Further, the remaining objects 18B-18E of the plurality 18 that were subsequently dispensed onto the angled rack element 300 may each be disposed upstream from the first object 18A (e.g., as defined relative to the transportation path 400) on the angled portion 303 in respective stationary positions based on a physical engagement with a downstream object adjacent thereto. For example, at least a portion of each of the plurality of objects disposed on the angled portion 303 may be resting on the object immediately downstream therefrom (e.g., third object 18C rests on second object 18B, fourth object 18D rests on third object 18C, etc.), such that the physical contact between an object and the downstream object adjacent thereto may be sufficient to counteract the gravitational forces acting on the object and prevent object from moving further along the angled rack element 300 towards the second end 302.

With further reference to FIG. 5A, in various embodiments, a second shuttle 10B may be moved along the second aisle 22 to a position wherein the second shuttle 10B is at least substantially adjacent and/or aligned with the second end 302 of the angled rack element 300 to facilitate the second shuttle's 10B execution of a first retrieval operation with respect to the first object 18A. As illustrated, the second shuttle 10B may engage the first object 18A disposed in the loading position at least substantially adjacent the second end 302 of the angled rack element 300, such as, for example, on top of the landing portion 304, in order to cause the first object 18A to be moved in a retrieval direction 500 to a load bed defined by the second shuttle 10B. For example, the second shuttle 10B may remove the first object 18A from the angled rack element 300 by engaging (e.g., grasping, pulling, suction force, and/or the like) the first object 18A to retrieve the first object 18A off of the angled rack element 300. In various embodiments, the gravitational forces acting on each of the one or more additional object(s) disposed on the angled portion 303 of the angled rack element 303 upstream from the first object 18A (e.g., the remaining objects 18B-18E, as illustrated) may cause a corresponding force to be imparted onto the first object 18A to assist with moving the first object 18A from the angled rack element 300 to the second shuttle 10B. As depicted in FIG. 5B, in various embodiments, at least substantially simultaneous and/or immediately subsequent to the removal of the first object 18A from the loading position, each of the remaining objects 18B-18E disposed on the angled rack element 300 may move along the transportation path 400 at least substantially towards the second end 302 of the angled rack element 300. For example, in such an exemplary circumstance, as illustrated, the second object 18B may be moved (e.g., as a result of one or more gravitational forces acting thereon) along the transportation path 400 into a loading position at least substantially adjacent the second end 302, such as, for example, by moving from the angled portion 303 onto the landing portion 304.

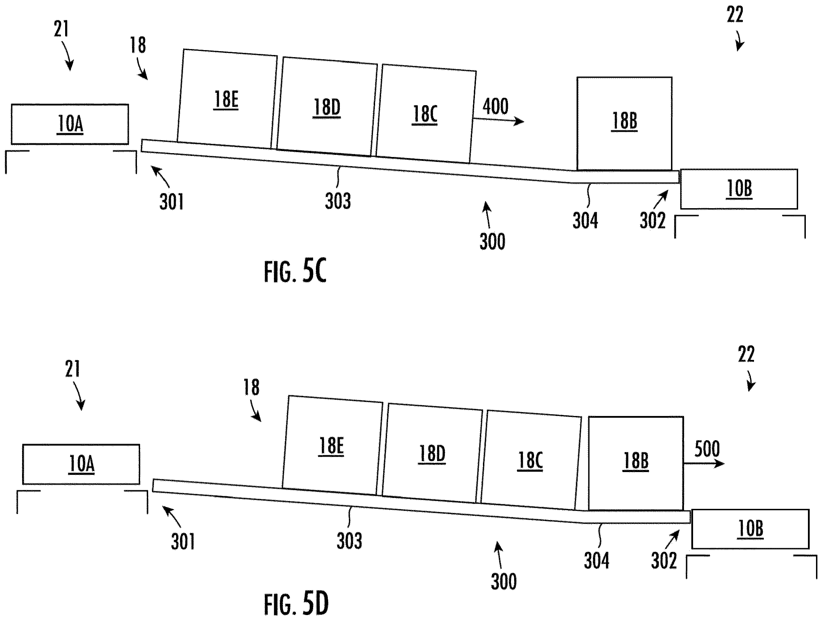

As illustrated in FIG. 5C, at least substantially simultaneous and/or immediately subsequent to the repositioning of the second object 18B into the loading position, each of the remaining objects 18C-18E disposed on the angled rack element 300 (e.g., on the angled portion 303) may move along the transportation path 400 at least substantially towards the second end 302. For example, the third object 18C may move along the transportation path 400 until a physical contact of the third object 18C with the stationary second object 18B prevents the third object 18C (e.g., and the other objects 18D, 18E upstream therefrom on the angled portion 303) from moving further towards the second end 302 of the angled rack element 300. For example, the third object 18C may assume a position previously held by the second object 18B when the first object 18A was provided in the loading position, as described above in reference to FIGS. 5A and 5B.

As illustrated in FIG. 5D, the second shuttle 10B may be moved along the second aisle 22 to a position wherein the second shuttle 10B is at least substantially adjacent and/or aligned with the second end 302 of the angled rack element 300 to facilitate the second shuttle's 10B execution of a second retrieval operation with respect to the second object 18B (upon completion of the first retrieval operation described above with respect to the first object 18A). As illustrated, the second shuttle 10B may engage the second object 18B disposed in the loading position in order to remove the cause the second object 18B to be moved in the retrieval direction 500 such that the second object 18B is removed from the loading position (e.g., off of the angled rack element) and onto to the second shuttle 10B.

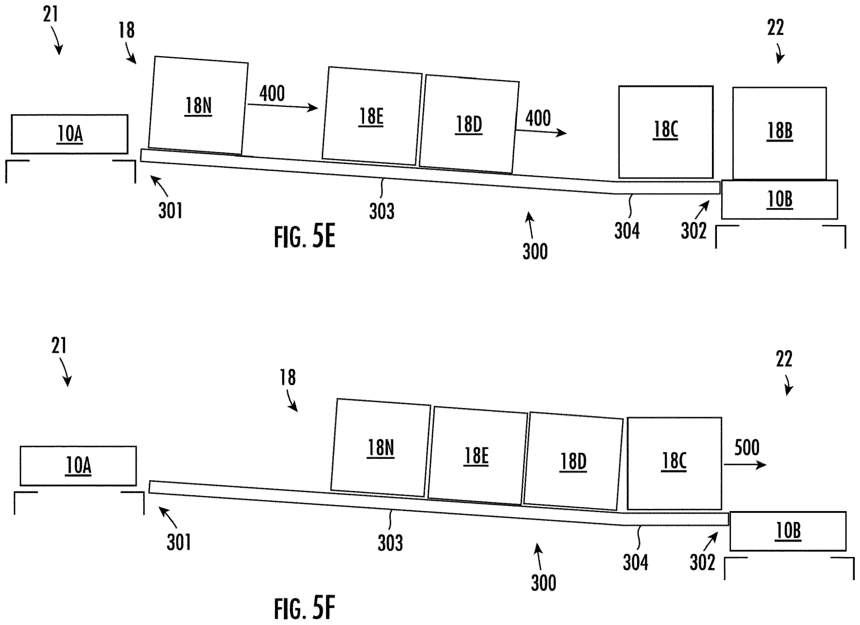

With reference to FIG. 5E, at least substantially simultaneous and/or immediately subsequent to the removal of the second object 18B from the loading position, each of the remaining objects 18C-18E disposed on the angled rack element 300 may move along the transportation path 400 at least substantially towards the second end 302 of the angled rack element 300. For example, in such an exemplary circumstance, as illustrated, the third object 18C may be moved (e.g., as a result of one or more gravitational forces acting thereon) along the transportation path 400 into a loading position at least substantially adjacent the second end 302, such as, for example, by moving from the angled portion 303 onto the landing portion 304. Further, at least substantially simultaneous and/or immediately subsequent to the repositioning of the third object 18C into the loading position, each of the remaining objects 18C-18E disposed on the angled rack element 300 (e.g., on the angled portion 303) may move along the transportation path 400 at least substantially towards the second end 302. For example, the fourth object 18D may move along the transportation path 400 until a physical contact of the fourth object 18D with the stationary third object 18C prevents the fourth object 18D (e.g., and the other object 18E upstream therefrom on the angled portion 303) from moving further towards the second end 302 of the angled rack element 300. For example, the fourth object 18D may assume a position previously held by the third object 18C when the second object 18B was provided in the loading position, as described above in reference to FIGS. 5C and SD.

In various embodiments, as depicted in FIG. 5E, the angled rack element 300 may be configured to receive from the first shuttle 10A disposed within the first aisle 21, one or more additional objects 18N at an upstream-most portion of the angled portion 303 at least substantially adjacent the first end 301 of the angled rack element 300. As illustrated, upon being dispensed from the first shuttle 10A onto the angled rack element 300 (e.g., onto the angled portion 303), one or more gravitational forces acting on the additional object 18N may cause the additional object 18N to move along the transportation path 400 until a physical contact of the additional object 18N with the stationary fifth object 18E prevents the additional object 18N from moving further towards the second end 302 of the angled rack element 300, as depicted in FIG. 5F.

Many modifications and other embodiments will come to mind to one skilled in the art to which this disclosure pertains having the benefit of the teachings presented in the foregoing descriptions and the associated drawings. Therefore, it is to be understood that the disclosure is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. An automated storage and retrieval system (AS/RS) comprising:
a first shuttle positioned within a first aisle and configured for transportation along a first length of the first aisle to one or more first storage locations defined by the first aisle;
a second shuttle configured for transportation along a second length of the second aisle, the second aisle being at least substantially parallel to the first aisle; and
an angled rack element provided in between the first aisle and the second aisle, wherein a first end of the angled rack element is positioned at least substantially adjacent the first aisle and a second end of the angled rack element is positioned at least substantially adjacent the second aisle, and wherein the angled rack element is configured to receive one or more object dispensed from the first shuttle onto a conveyance surface defined by the angled rack element;
wherein the angled rack element defines a pitch angle defined relative to a horizontal plane such that the angled rack element facilitates movement of the one or more object disposed on the conveyance surface along a unidirectional transportation path towards a loading position defined at least substantially adjacent the second end of the angled rack element; and
wherein the angled rack element is configured such that the one or more object provided in the loading position is accessible to the second shuttle via the second aisle to facilitate execution of a retrieval operation with respect to the one or more object by the second shuttle.

2. The AS/RS of claim 1, wherein the angled rack element is configured to utilize the one or more gravitational forces to facilitate transportation of the one or more object from the first shuttle to the second shuttle.

3. The AS/RS of claim 1, wherein the first shuttle is configured to dispense a first object onto the angled rack element during a first dispense operation and subsequently dispense a second object onto the angled rack element during a distinct second dispense operation; and wherein the angled rack element is configured to facilitate a first object movement of the first object and a second object movement of the second object along the unidirectional transportation path towards the second end of the angled rack element such that the first object is moved to the loading position and the second object is moved to an upstream position defined relative to the first object along the conveyance surface.

4. The AS/RS of claim 3, wherein the second object is stopped in the upstream position based at least in part on the second object physically contacting the first object disposed in the loading position.

5. The AS/RS of claim 3, wherein the angled rack element is configured such that, upon the first object being removed from the loading position by the second shuttle, the pitch angle causes the second object to automatically move along the unidirectional transportation path at least partially towards the second end of the angled rack element based at least in part on the one or more gravitational forces acting on the second object.

6. The AS/RS of claim 1, wherein the AS/RS comprises a plurality of aisles defined at least in part by the first aisle and the second aisle, wherein the first aisle and the second aisle are arranged relative to one another so as to define adjacent aisles within the plurality of aisles defined by the AS/RS.

7. The AS/RS of claim 1, wherein the pitch angle is at least approximately between 2 degrees and 15 degrees.

8. The AS/RS of claim 1, wherein the angled rack element comprises one or more conveyance element arranged between the first end and the second end that define the conveyance surface and is configured to facilitate the movement of the one or more objects along the unidirectional transportation path.

9. The AS/RS of claim 8, wherein the one or more conveyance element is defined by a plurality of rollers comprising at least one idler roller rotatably installed between a set of opposing lateral frame elements, each of the rollers being configured to rotate about a respective central axis oriented in a direction at least substantially perpendicular to the unidirectional transportation path.

10. The AS/RS of claim 8, wherein the one or more conveyance element is defined by a conveyor belt that defines the conveyance surface of the angled rack element.

11. The AS/RS of claim 1, wherein the first end of the angled rack element is configured to be secured to a first vertical rack component positioned along at least a portion of the first aisle, and the second end of the angled rack element is configured to be secured to a second vertical rack component positioned along at least a portion of the second aisle.

12. The AS/RS of claim 1, wherein the loading position is defined at least in part by a downstream-most portion of the conveyance surface at least substantially adjacent the second end of the angled rack element.

13. The AS/RS of claim 1, wherein the angled rack element defines an angled portion and a landing portion, wherein the pitch angle of the angled rack element is defined by the angled portion, and wherein the landing portion is arranged at a downstream position relative to the angled portion.

14. The AS/RS of claim 13, wherein the landing portion is defined by an at least substantially horizontal surface configured to receive the one or more objects moving along the unidirectional transportation path from the angled portion.

15. The AS/RS of claim 13, wherein the first end of the angled rack element is defined by the angled portion and the second end of the angled rack element is defined by the landing portion.
